# FASCICULE DE BREVET EUROPEEN

(11) **EP 0 822 605 B1**
(45) Date de publication et mention de la délivrance du brevet: **26.04.2000**
(21) Numéro de dépôt: 97401780.8
(22) Date de dépôt: 24.07.1997
(51) Int. Cl.: H01M 2/26, H01M 2/06, H01M 10/40, H01M 10/04

(54) **Générateur électrochimique cylindrique à électrodes enroulées en spirale**
Zylindrischer elektrochemischer Generator mit spiralförmig gewickelten Elektroden
Cylindrical electrochemical generator with spirally wounded electrodes

(30) Priorité: 30.07.1996 FR 9609569
(43) Date de publication de la demande: 04.02.1998
(73) Titulaire: SAFT, F-93230 Romainville (FR)
(72) Inventeur: Fradin, Jean, 86240 Fontaine le Comte (FR)
(74) Mandataire: Doressamy, Clarisse

(56) Documents cités:
- EP-A- 0 357 399
- EP-A- 0 620 610
- FR-A- 1 484 611
- US-A- 3 257 238
- US-A- 3 490 949
- US-A- 3 565 690
- US-A- 3 775 182
- US-A- 4 053 687
- US-A- 4 322 484
- PATENT ABSTRACTS OF JAPAN vol. 012, no. 020 (E-575), 21 janvier 1988 -& JP 62 177869 A (SHIN KOBE ELECTRIC MACH CO LTD), 4 août 1987,
- PATENT ABSTRACTS OF JAPAN vol. 008, no. 268 (E-283), 7 décembre 1984 -& JP 59 139555 A (TOSHIBA DENCHI KK), 10 août 1984,

## Description

La présente invention concerne un générateur électrochimique rechargeable à électrodes spiralées, notamment un générateur électrochimique au lithium.

On sait que dans un générateur électrochimique à électrodes spiralées, les électrodes, sous forme de rubans sont enroulées autour d'un mandrin central pour former un cylindre. Chaque électrode comprend un collecteur de courant métallique qui supporte sur au moins une de ses faces la matière active de l'électrode. Elle est connectée électriquement à une borne de sortie de courant qui assure la continuité électrique entre l'électrode et l'application extérieure à laquelle le générateur est associé.

La borne traverse le conteneur du générateur : la partie située à l'extérieur du conteneur reçoit les connexions extérieures, la partie située à l'intérieur est reliée aux électrodes. Cette borne peut être solidaire ou rapportée au conteneur. Lorsqu'elle est rapportée au conteneur, un joint d'étanchéité et d'isolation électrique est usuellement prévu entre ladite borne et le conteneur du générateur.

Il existe plusieurs façons de raccorder électriquement une électrode à une sortie de courant.

L'une de ces façons est l'utilisation d'une lamelle conductrice ou mince bande métallique : l'une de ses extrémités est soudée sur le bord du collecteur, l'autre extrémité étant soudée à la partie interne de la borne située à l'intérieur du conteneur. Pour des raisons d'encombrement, la lamelle est généralement fixée sur la partie du collecteur la plus proche de l'axe de spiralage. Une seule lamelle suffit pour une électrode d'une faible capacité, par exemple une capacité inférieure à 5 ampères-heures et d'une faible puissance, par exemple inférieure à 40 watts.

L'invention a pour but de proposer un générateur électrochimique à électrodes spiralées, d'une grande capacité et/ou d'une grande puissance.

L'invention a pour but de proposer un générateur électrochimique au lithium à électrodes spiralées d'une grande capacité et/ou d'une grande puissance.

On appelle grande capacité une capacité supérieure à 20 ampères-heure. Une grande puissance est, selon l'invention, est puissance supérieure à 60 watts.

L'invention concerne un générateur électrochimique rechargeable à électrodes spiralées comprenant un conteneur, deux bornes de sorties de courant de polarité opposée , portées par ledit conteneur, chacune des sorties de courant comprenant une partie extérieure au conteneur et une partie interne, et deux électrodes spiralées selon un axe longitudinal, l'une de polarité positive et l'autre de polarité négative raccordées électriquement à la sortie de courant correspondante caractérisé en ce que au moins une borne de sortie de courant comprend une partie interne munie d'un épaulement cylindrique d'un diamètre supérieur à la dimension transversale de la partie extérieure et en ce que l'électrode correspondante est munie de plusieurs lamelles conductrices, s'étendant en partie sensiblement parallèlement audit axe longitudinal, reliées mécaniquement et électriquement à l'un des bords de l'électrode, saillantes audit bord, ces lamelles étant rassemblées et fixées sur au moins une partie de la périphérie dudit épaulement afin d'établir le contact électrique entre ladite électrode et ladite borne de sortie de courant.

On appelle périphérie la surface séparant les deux sections qui délimitent l'épaulement de la partie interne de la borne.

Après le spiralage de cette électrode munie de ces lamelles, la position des lamelles devient irrégulière sur la section du cylindre formée par cette électrode. Le raccord électrique est fait, selon l'invention, quelque soit la position et le nombre de ces lamelles.

Afin de pouvoir utiliser des lamelles d'une longueur fixe quelque soit leur position vis à vis de l'axe de spirale de l'électrode, l'épaulement sur laquelle sont fixées les lamelles a, de préférence, une largeur comprise entre 40 et 60 % de la distance comprise entre le rayon extérieur et le rayon intérieur du cylindre formé par la spirale de l'électrode. Avantageusement, cette largeur est sensiblement égale à la moitié de la distance comprise entre le rayon extérieur et le rayon intérieur du cylindre formé par la spirale de l'électrode.

Afin de limiter l'encombrement de cette partie interne, il s'agit de préférence d'un cylindre de faible hauteur, par exemple une hauteur comprise entre 2 et 5 mm.

Cette partie interne est connectée électriquement à l'électrode correspondante par l'intermédiaire des lamelles conductrices. Ladite électrode est longue, c'est-à-dire qu'avant le spiralage elle présente une longueur (par rapport à la largeur) importante. L'électrode est spiralée selon cette longueur. Les lamelles sont tout d'abord rassemblées autour de ladite périphérie par tout moyen adéquat. Il s'agit de préférence d'un moyen de pressage afin d'améliorer le contact électrique entre lesdites lamelles et la borne : quelque soit leur nombre, elles peuvent former un seul ensemble conducteur relié électriquement à la borne. Elles y sont ensuite fixées par tout moyen qui permet d'obtenir une fixation durable et qui permet d'assurer la conduction du courant entre les lamelles et la borne. Il peut s'agir d'un moyen mécanique tel qu'une bague ou un fil associé à une gorge, présente sur la périphérie dudit épaulement. Il s'agit, de préférence, d'une fixation par soudure, par exemple une soudure électrique ou par ultrasons.

Ces lamelles sont éventuellement maintenues sur ladite périphérie avant leur fixation, par exemple par soudure, par un moyen adéquat tel que les moyens mécaniques cités précédemment. Ce moyen peut être enlevé ou laissé sur la borne.

Selon une variante de l'invention, la sortie de courant est une borne de sortie de courant dont la partie interne comprend deux zones : une zone inférieure comprenant l'épaulement sur au moins une partie de la périphérie duquel sont fixées les lamelles et une zone supérieure comprenant au moins un méplat susceptible de coopérer avec une butée fixée sur la face interne du conteneur du générateur par l'intermédiaire d'au moins un méplat présent sur un joint situé entre ladite zone supérieure et ladite butée

La hauteur de la partie interne est alors, par exemple, comprise entre 3 et 10 mm.

Selon une autre variante de l'invention, la sortie de courant est une borne de sortie de courant portée par le couvercle du générateur. La borne est fixée sur ledit couvercle selon cette variante par l'écrasement d'un joint présent entre ladite borne et ledit couvercle. Cet écrasement est obtenu, par exemple, par un moyen de serrage. Ce moyen de serrage peut être, par exemple, le serrage d'un écrou ou l'appui d'une pièce de fixation.

L'électrode selon l'invention a une longueur supérieure à 2 mètres, voire 5 mètres. Elle est, par exemple comprise entre 3 et 7 mètres. Le nombre de lamelles connectées à cette électrode est fonction de la capacité de l'électrode, de sa longueur et de la puissance requise. La distance entre deux lamelles sur l'électrode est par exemple comprise entre 60 et 300 millimètres. Elles sont de préférence disposées à intervalles réguliers. Le nombre de ces lamelles est supérieur à 3 et peut même être supérieur à 10 voire 30. Leur nombre est par exemple compris entre 15 et 40.

L'électrode selon l'invention comprend un ruban en forme de spirale supportant sur au moins une partie d'au moins une de ses faces la matière active de l'électrode. Le collecteur de courant est, par exemple, une mince feuille métallique, d'une épaisseur inférieure à 50 microns (1 micron = 1µm). Le bord du collecteur de courant peut être renforcé. Ce renfort est, par exemple, une surépaisseur rapportée ou solidaire audit bord. Il s'agit, par exemple, d'un renflement de l'épaisseur du bord ou d'une pièce rapportée. Cette pièce peut être, par exemple, de dimensions quasiment identiques aux dimensions du bord à renforcer. Elle est fixée audit bord, par exemple par soudure. Elle peut être également en forme de U, les ailes du U venant chevaucher les faces du bord. Elle peut alors être fixée au bord par pincement, soudure ou tout autre moyen.

Chaque lamelle est fixée à l'un des bords de l'électrode par tout moyen afin d'assurer la liaison électrode/lamelle et afin de conduire le courant. Elles sont fixées, par exemple, par soudure. La lamelle peut être une mince bande métallique dont une extrémité est fixée sur le bord du collecteur, l'autre extrémité étant reliée à la sortie de courant. Les deux extrémités de la mince bande métallique peuvent également être fixées sur ledit bord, la lamelle formant une boucle dont l'extrémité est reliée électriquement à la sortie de courant. La lamelle est donc, avant le spiralage et la fixation sur l'épaulement de la partie interne, totalement parallèle à l'axe longitudinal. Après le spiralage et la fixation sur ledit épaulement, la lamelle comprend donc une partie émergeante éventuellement renforcée, sensiblement parallèle à l'axe longitudinal, et une partie qui converge vers ledit épaulement.

Le générateur selon l'invention est avantageusement un générateur au lithium. Sa capacité est par exemple supérieure à 20 ampères-heures et/ou sa puissance est par exemple supérieure à 60 watts.
L'invention concerne également un générateur au lithium comprenant un conteneur, muni d'un fond et d'un couvercle, portant chacun une borne de sortie de courant, au moins une électrode positive et une électrode négative spiralées selon un axe longitudinal, connectées respectivement à la sortie de courant correspondante et un ensemble de connexions pour raccorder électriquement chaque électrode à la borne de sortie de courant correspondante. La borne comprend, selon l'invention, une partie extérieure et une partie interne, la partie interne comprenant un épaulement cylindrique dont le diamètre est supérieur à la dimension transversale de la partie extérieure de la borne de la partie supérieure de la borne. L'ensemble de connexions est, selon l'invention, pour chaque électrode, un ensemble de lamelles conductrices, s'étendant en partie sensiblement parallèlement audit axe longitudinal, reliées mécaniquement et électriquement à l'un des bords de l'électrode, saillantes audit bord. Ces lamelles sont rassemblées et fixées sur au moins une partie de la périphérie dudit épaulement afin d'établir le contact électrique entre l'épaulement et la sortie de courant. Le générateur selon l'invention est d'une capacité supérieure à 20 ampères/heure et/ou d'une puissance supérieure à 60 watts.

L'électrode positive est, par exemple raccordée électriquement à une borne de sortie de courant au même potentiel que le conteneur du générateur. Le conteneur est, par exemple, en aluminium.

Chaque électrode comprend un ruban en forme de spirale supportant sur au moins une partie d'au moins une de ses faces la matière active de l'électrode.

La matière active de l'électrode positive comprend alors un composé susceptible d'insérer du lithium. Elle est choisie parmi un oxyde de métaux de transition, un sulfure, un sulfate et leurs mélanges. Il s'agit, par exemple, d'un composé choisi parmi les sulfures métalliques lithiés, les séléniures métalliques lithiés, les oxydes métalliques lithiés et les oxydes lithiés des métaux de transition, et leurs mélanges. On pourra utiliser, par exemple, des dérivés du molybdène, du titane, du chrome, du nickel, du vanadium, du manganèse, du cobalt, du cuivre, du fer, du tungstène, du niobium, du ruthénium ou de l'iridium. Il s'agit, par exemple, d'oxydes métalliques lithiés choisis, par exemple parmi les oxydes de cobalt, de nickel, de manganèse, de vanadium, de fer, de titane et leurs mélanges. Le matériau du collecteur est tout matériau compatible avec la matière active de l'électrode et l'électrolyte utilisé. Il est choisi, par exemple, parmi de l'aluminium ou de l'acier inoxydable. Son épaisseur est, par exemple, inférieure à 50 microns. Elle est, par exemple, comprise entre 10 et 20 microns.

La matière active d'une électrode négative, susceptible d'être utilisée dans un générateur au lithium, comprend du lithium ou un composé susceptible d'insérer du lithium, par exemple un matériau carboné choisi parmi le graphite, le coke, et le carbone vitreux. Le matériau de son collecteur est compatible avec la matière active de l'électrode et l'électrolyte utilisé. Il est choisi parmi le cuivre ou le nickel. Son épaisseur est , par exemple, inférieure à 50 microns. Elle est, par exemple, comprise entre 10 et 20 microns.

Le matériau des lamelles de l'invention est de préférence de même nature que le collecteur sur lequel elles sont fixées. Elles ont une épaisseur comprise entre 50 et 200 microns, de préférence de l'ordre de 100 microns.

D'autres caractéristiques et avantages de l'invention apparaîtront dans la description suivante donnée à titre illustratif et non limitatif, en référence aux dessins annexés sur lesquels :
- la figure 1 représente une vue schématique d'une électrode selon l'invention, susceptible d'être spiralée,
- la figure 2 représente une vue schématique partielle, en perspective d'un ensemble d'électrodes spiralées selon l'invention,
- la figure 3 représente une vue schématique en perspective de la connexion électrique selon l'invention d'une électrode à une borne de sortie de courant correspondante,
- la figure 4 représente une demi-coupe schématique longitudinale de la borne de la figure 3,
- la figure 5 représente une demi-coupe schématique longitudinale de la connexion électrique d'une électrode à une deuxième variante d'une borne selon l'invention.
- la figure 6 représente une vue schématique en perspective de la borne de la figure 5, connectée électriquement à une électrode,
- la figure 7 représente une demi-coupe schématique longitudinale de deux électrodes de polarité opposée connectées électriquement aux deux bornes de sortie de courant correspondantes,

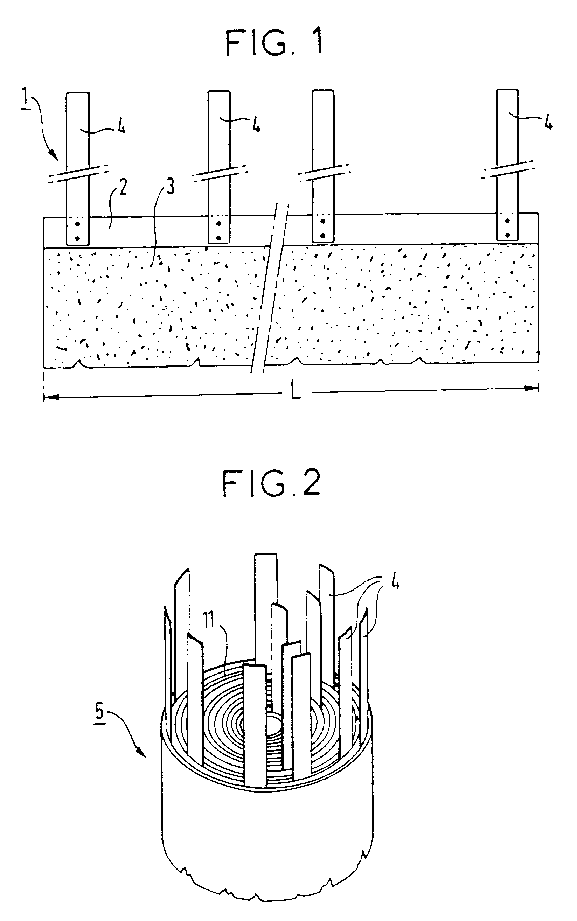

Une électrode 1, susceptible d'être spiralée est représentée sur la figure 1. Elle comporte un collecteur 2 en forme de ruban supportant sur au moins une de ses faces la matière active, 3, de l'électrode. Ce collecteur 2 est en un matériau conducteur, stable vis à vis de la matière active de l'électrode et de l'électrolyte utilisé. Il a été mis à nu le long de son plus grand bord, soit la longueur L de l'électrode de manière à pouvoir fixer sur ce bord 2 plusieurs lamelles conductrices 4. Ces lamelles 4 s'étendent sensiblement perpendiculairement audit bord et y sont connectées électriquement. Ce bord peut avoir été préalablement consolidé par une surépaisseur ou une pièce rapportée. Le matériau des lamelles 4 est de préférence de même nature que celui du collecteur sur lequel elles sont fixées. L'épaisseur de ces lamelles est inférieure à 200 microns. Il s'agit d'une simple bande métallique ou d'une bande métallique dont une extrémité est fixée sur le collecteur 2 formant une boucle dont les deux extrémités sont fixées en un même point sur le bord du collecteur 2. Elles sont fixées, par exemple par soudure. Cette électrode peut être, par exemple, utilisée pour un générateur au lithium de grande capacité et/ou de grande puissance.

La figure 2 illustre une vue en perspective d'un ensemble 5 d'électrodes spiralées afin de former un cylindre. Cet ensemble est constitué de deux électrodes de polarité opposée et deux séparateurs non représentés. Le collecteur de courant de chacune des électrodes supporte sur chacune de ces faces la matière active de l'électrode. Les deux séparateurs sont intercalés entre chaque électrode. Chaque électrode est reliée à une sortie de courant correspondante. L'électrode négative, 11, est par exemple reliée à une sortie de courant, non représentée, au moyen des lamelles 4. On voit bien sur cette figure la position non régulière des lamelles 4 sur la section du cylindre formé par l'ensemble 5 des électrodes.

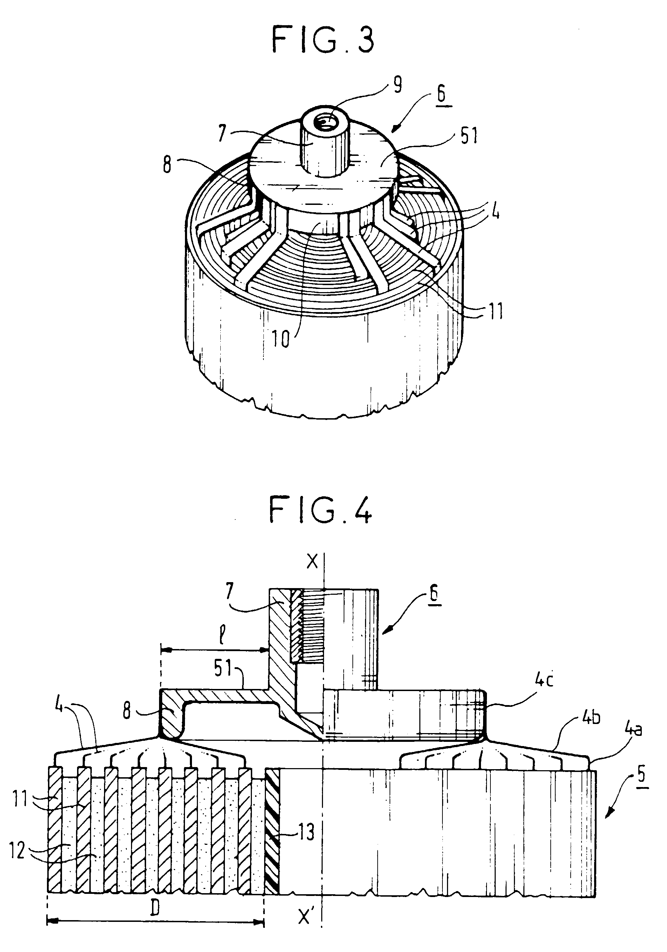

La figure 3 illustre le raccordement des lamelles 4 à une borne de sortie de courant, 6, selon l'invention. Cette borne comprend une partie extérieure 7 au conteneur du générateur, non représenté, et une partie 8 située à l'intérieur du conteneur. Cette partie extérieure 7 reçoit la connexion de l'application extérieure à laquelle le générateur est associé au moyen, par exemple, d'un filetage 9. La partie interne 8 est munie d'un épaulement 51, cylindrique dont le diamètre est supérieur à celui de la partie supérieure 7 de la borne. Cet épaulement est ici représenté comme un cylindre de faible hauteur sur la périphérie 10 de laquelle les lamelles 4 ont été rassemblées et fixées. Pour des raisons de compréhension de la figure, seules quelques lamelles 4 ont été représentées fixées sur une partie de la périphérie 10 de l'épaulement 51. Les lamelles 4 peuvent par exemple avoir été rassemblées sur ladite périphérie 10 par un moyen de pressage, tel qu'une pièce cylindrique animée d'un mouvement concentrique vers la périphérie 10 de l'épaulement 51. Ce pressage permet en outre d'améliorer le contact électrique entre les lamelles 4 et la borne 6 dans la mesure où les lamelles sont serrées les unes contre les autres et contre la borne 6. Les lamelles 4 sont ensuite fixées par un moyen de fixation choisi afin d'obtenir une fixation durable et une conduction électrique entre ces lamelles et la borne. Elles sont fixées de préférence par soudure.

La figure 4 est une demi-coupe longitudinale schématique de la borne de la figure 3. L'ensemble 5 d'électrodes comprend une électrode négative 11 et une électrode positive 12, séparées par un séparateur, non représenté. Elles sont spiralées autour d'un mandrin central 13, comprenant l'axe longitunal X'X en un matériau isolant. Sur cette figure, la largeur 1 de l'épaulement 51 est sensiblement égal à la moitié de la distance D entre le rayon externe et interne du cylindre formé par l'ensemble 5 des électrodes 11 et 12. Cette figure fait apparaître la partie émergeante 4a d'une lamelle 4, sensiblement parallèle à l'axe longitudinal, ainsi que la partie convergente 4b de ladite lamelle 4, puis une autre partie 4c de ladite lamelle 4.

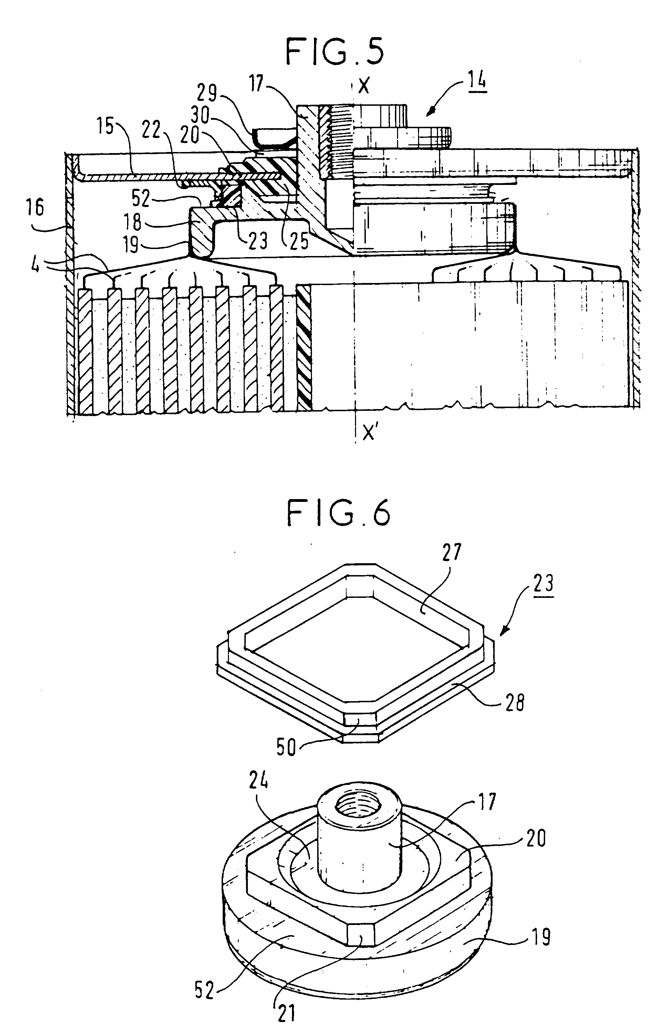

Les figures 5 et 6 représentent une variante d'une borne, 14, selon l'invention. Cette borne est portée par le conteneur du générateur. Ce conteneur comprend un couvercle métallique 15 et un bac 16. Le conteneur est sensiblement un cylindre d'axe longitudinal X'X. Le couvercle 15, est par exemple soudé au bac 16 et il porte la borne 14. Cette borne 14 comprend une partie extérieure 17, par exemple identique à celle représentée sur la figure 3 et une partie interne 18. Cette partie interne comprend, selon cette variante, une zone inférieure 19 munie d'un épaulement 52 sur la périphérie duquel sont fixées les lamelles 4, et une zone supérieure 20 comprenant au moins un méplat 21 représentée sur la figure 6 coopérant avec une butée 22, par l'intermédiaire d'un joint 23 afin d'interdire tout mouvement de rotation de la borne 14 lorsqu'elle est soumise à un mouvement de serrage comme il sera décrit plus loin. Ce méplat 21 est, par exemple, obtenu en biseautant les coins de la zone supérieure 20. Cette zone supérieure 20 comprend en son centre un évidement conique 24, représenté sur la figure 6, pour recevoir un joint 25, représenté sur la figure 5 d'étanchéité et d'isolation électrique entre la borne 14 et le couvercle 15 du générateur. Le joint d'arrêt de rotation 23 a une section intérieure 27 identique à la section extérieure de la zone supérieure 20. Il présente, par conséquent, au moins un méplat 50. Ce joint d'arrêt de rotation 23 présente, par ailleurs, un rebord 28 afin de coopérer avec la butée 22 représentée sur la figure 5, et fixée sur le couvercle 15. La présence du méplat 21, du joint 23 comportant au moins un méplat 50 et de la butée 22 empêche tout mouvement de rotation de ladite borne sous l'action d'un mouvement de serrage. Ce mouvement peut être dû à la fixation de la connexion extérieure de l'application à laquelle le générateur est associé et/ou à la fixation de la borne 14 sur le couvercle 15.

La borne 14 est fixée sur le couvercle 15 du générateur par l'écrasement du joint 25 par un moyen de serrage. Ce moyen est ici l'appui d'une pièce de fixation 29. Il s'agit d'une bague à l'intérieur de laquelle vient s'insérer la borne 14. Le diamètre intérieur de la pièce 29 est par exemple légèrement inférieur au diamètre de la partie extérieure 17 de la borne 14 pour permettre le maintien de ladite borne dans cette pièce. Sous l'action de la pression exercée par la pièce 29 et la rondelle de serrage métallique 30, le joint 25 est écrasé comme représenté, entre la rondelle 30, le couvercle 15 et la borne 14, notamment l'épaulement 52 de la zone inférieure 19 de la partie interne 18.

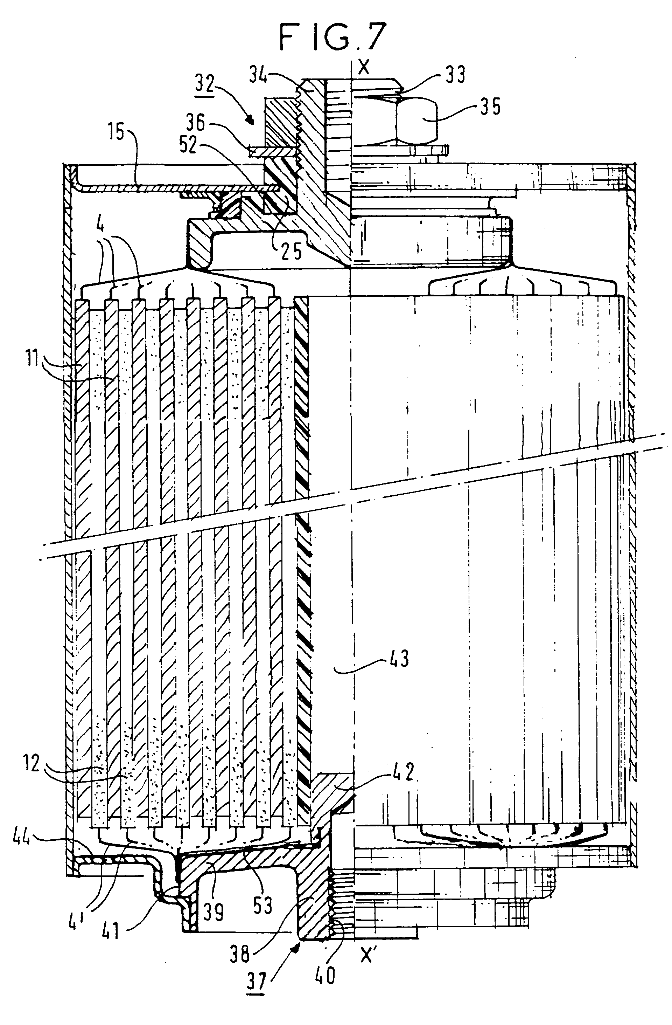

La figure 7 représente le raccordement électrique selon l'invention de deux électrodes 11 et 12 connectées à deux bornes de sorties de courant 32 et 37. On reconnaît l'axe X'X du conteneur sensiblement cylindrique. L'une de polarité négative, 11, est connectée à une borne de sortie de courant 32 à l'aide des lamelles 4 et l'autre électrode 12, de polarité positive, est connectée à la borne de sortie de courant 37. La borne 32 est globalement identique à la borne 14 de la figure 5 ou 6 excepté qu'elle comporte un filetage externe 33 présente sur la partie extérieure 34 de la borne. Ce filetage permet la présence d'un écrou métallique 35 et d'une rondelle de serrage métallique 36. Sous l'action de la pression exercée par ce moyen de serrage, le joint 25 est écrasé, comme représenté, entre la rondelle de serrage 36, le couvercle 15 et la borne 32, notamment l'épaulement 52.

L'électrode 12 est connectée selon l'invention à une borne de sortie de courant 37 à l'aide des lamelles 4'. La borne est ici au même potentiel que les lamelles 4' et l'électrode 12, soit de polarité positive du fait de l'absence de joint d'isolation électrique. La borne 37 comprend une partie extérieure 38 au conteneur du générateur et une partie 39, interne au conteneur. La partie externe est connectée électriquement à l'application extérieure à laquelle le générateur est associé au moyen, par exemple, d'un filetage 40. La partie interne 39 est munie d'un épaulement 53. Elle est connectée à l'électrode 12 au moyen des lamelles 4' rassemblées et fixées sur au moins une partie de la périphérie 41 de l'épaulement 53. Elle comprend, en outre, une proéminence 42 pouvant s'insérer dans la cavité 43 du mandrin creux 13 autour duquel les électrodes 11 et 12 ont été spiralées. Cette proéminence 42 permet d'assurer le centrage de la borne vis-à-vis de l'ensemble 5 d'électrodes lors de son montage. On voit sur cette figure que la borne fait partie du fond du conteneur dont une partie a été usinée de manière à présenter cette forme. Le fond du conteneur est constitué de la borne 37 et d'une pièce auxiliaire 44. Cette pièce est par exemple non solidaire au conteneur du générateur afin de permettre un libre accès à la périphérie 41 de l'épaulement 53 pour y fixer les lamelles 4'. Elle est ensuite rapportée et fixée au bac 16 et à la borne 37, par exemple par soudure.

Selon une autre variante non représentée, la fixation de la borne 32 sur le couvercle 15 et la connexion de l'application extérieure à laquelle le générateur est associé sont obtenus à l'aide d'un moyen unique de serrage comme décrit notamment dans le document US-3762958.

Ces différents modes de réalisation de l'invention et différentes variantes sont donnés à titre illustratif et non limitatif.

## Revendications

1. Générateur électrochimique rechargeable à électrodes spiralées comprenant un conteneur, deux bornes de sorties de courant de polarité opposée (6, 14, 32, 37), portées par ledit conteneur, chacune des sorties de courant comprenant une partie extérieure au conteneur (7, 17, 34, 38) et une partie interne (8, 18, 39), et deux électrodes spiralées selon un axe longitudinal (X'X), l'une de polarité positive (12) et l'autre de polarité négative (11) raccordées électriquement à la sortie de courant correspondante caractérisé en ce que au moins une borne de sortie de courant comprend une partie interne munie d'un épaulement cylindrique (51, 52, 53) d'un diamètre supérieur à la dimension transversale de la partie extérieure (7, 17, 34, 38) et en ce que l'électrode correspondante est munie de plusieurs lamelles conductrices (4, 4'), s'étendant en partie sensiblement parallèlement audit axe longitudinal, reliées mécaniquement et électriquement à l'un des bords de l'électrode, saillantes audit bord, ces lamelles (4, 4') étant rassemblée et fixée sur au moins une partie de la périphérie (10, 41) dudit épaulement afin d'établir le contact électrique entre ladite électrode et ladite borne de sortie de courant.

2. Générateur selon la revendication 1, caractérisé en ce que ledit épaulement (51, 52, 53) a une largeur comprise entre 40 et 60 % de la distance comprise entre le rayon extérieur et le rayon intérieur du cylindre formé par la spirale des électrodes.

3. Générateur selon la revendication 2, caractérisé en ce que cette largeur est sensiblement égale à la moitié de la distance comprise entre le rayon extérieur et le rayon intérieur du cylindre formé par les électrodes.

4. Générateur selon l'une des revendications 1 à 3, caractérisé en ce que l'épaulement cylindrique a une hauteur comprise entre 2 et 5 mm.

5. Générateur selon l'une des revendications précédentes caractérisé en ce que les lamelles sont fixées par soudure à ladite périphérie.

6. Générateur selon la revendication 5, caractérisé en ce que les lamelles ont été maintenues sur ladite périphérie par un moyen choisi parmi une bague ou un fil associé à une gorge présente sur ladite périphérie.

7. Générateur selon l'une des revendications précédentes, caractérisé en ce que la partie interne de la borne comprend deux zones, une zone inférieure (19) comprenant un épaulement 52 sur au moins une partie la périphérie duquel sont fixées lesdites lamelles (4, 4') et une zone supérieure (20) comprenant au moins un méplat (21) coopérant avec une butée (22) fixée sur la face interne du conteneur du générateur par l'intermédiaire d'au moins un méplat (50) présent sur un joint (23) situé entre ladite zone supérieure et ladite butée.

8. Générateur selon la revendication 7, caractérisé en ce que la hauteur de la partie interne est comprise entre 3 et à 10 mm.

9. Générateur selon l'une des revendications précédentes, caractérisé en ce que le conteneur du générateur comprend au moins un couvercle (15) traversé par ladite borne qui est fixée audit couvercle par l'écrasement d'un joint (25) présent entre la borne et ledit couvercle.

10. Générateur selon la revendication 9 caractérisé en ce que cet écrasement est obtenu par un moyen de serrage choisi parmi un écrou (35) ou l'appui d'une pièce de fixation (29).

11. Générateur selon l'une des revendications précédentes, caractérisé en ce que la longueur de l'électrode est supérieure à 2 mètres.

12. Générateur selon l'une des revendications précédentes, caractérisé en ce que le nombre de lamelles conductrices est supérieur à 3.

13. Générateur selon l'une des revendications précédentes, caractérisé en ce que l'électrode comprend un ruban en forme de spirale dit collecteur de courant supportant sur au moins une partie d'au moins une de ces faces la matière active de l'électrode, l'épaisseur du collecteur de courant étant inférieure à 50 microns (1 micron = 1µm).

14. Générateur selon l'une des revendications précédentes, caractérisé en ce que l'électrode comprend un ruban en forme de spirale dit collecteur de courant supportant sur au moins une partie d'au moins une de ces faces la matière active de l'électrode, le bord du collecteur étant renforcé par une surépaisseur, solidaire ou rapportée audit bord.

15. Générateur selon la revendication 1, caractérisé en ce que la lamelle est une mince bande métallique dont les deux extrémités sont fixées au collecteur, la lamelle formant une boucle.

16. Générateur selon l'une des revendications précédentes caractérisé en ce que ce générateur est au lithium.

17. Générateur électrochimique au lithium comprenant un conteneur, muni d'un fond et d'un couvercle (15), portant chacun une borne de sortie de courant (6, 14, 32, 37), une électrode positive (12) et une électrode négative (11) spiralées selon un axe longitudinal (X'X), connectées respectivement à la sortie de courant correspondante et un ensemble de connexions pour raccorder électriquement chaque électrode à la borne de sortie de courant correspondante , caractérisé en ce que la borne comprend une partie extérieure (7, 17, 34, 38) et une partie interne (8, 18, 39), la partie interne de la borne étant munie d'un épaulement cylindrique (51, 52, 53) d'un diamètre supérieur à la dimension transversale de la partie extérieure de la borne et en ce que cet ensemble de connexions est, pour chaque électrode, un ensemble de lamelles conductrices (4, 4'), s'étendant en partie sensiblement parallèlement audit axe longitudinal, reliées mécaniquement et électriquement à l'un des bords de l'électrode, saillantes audit bord, ces lamelles (4, 4') étant rassemblées et fixées sur au moins une partie de la périphérie dudit épaulement afin d'établir le contact électrique entre ladite électrode et la borne de sortie de courant correspondante.

18. Générateur selon la revendication 17, caractérisé en ce que l'électrode positive (12) est raccordée électriquement à une borne de sortie de courant (37) au même potentiel que le conteneur du générateur.

19. Générateur selon la revendication 17, caractérisé en ce que le conteneur est en aluminium.

20. Générateur selon la revendication 17, caractérisé en ce que l'électrode comprend un ruban en forme de spirale supportant sur au moins une partie d'au moins une de ses faces la matière active de l'électrode, ladite matière active de l'électrode positive comprenant un oxyde métallique lithié.

21. Générateur selon la revendication 20 caractérisé en ce que ledit oxyde métallique lithié est choisi parmi les oxydes de cobalt, de nickel, de manganèse, de vanadium, de fer, de titane et leurs mélanges.

22. Générateur selon l'une des revendications 20 ou 21, caractérisé en ce que le matériau du collecteur de courant de l'électrode positive est choisi parmi de l'aluminium ou de l'acier inoxydable.

23. Générateur selon l'une des revendications 20 à 22, caractérisé en ce que l'épaisseur du collecteur de l'électrode positive est inférieure à 50 microns.

24. Générateur selon l'une des revendications 20 à 23, caractérisé en ce que le matériau des lamelles connectées à l'électrode positive est choisie parmi de l'aluminium ou de l'acier inoxydable et son épaisseur est comprise entre 50 et 200 microns.

25. Générateur selon l'une des revendications 17 à 24, caractérisé en ce que l'électrode comprend un ruban en forme de spirale supportant sur au moins une partie d'au moins une de ses faces la matière active de l'électrode, la matière active de l'électrode négative comprenant du lithium

26. Générateur selon l'une des revendications 17 à 25 caractérisé en ce que l'électrode comprend un ruban en forme de spirale dit collecteur de courant supportant sur au moins une partie d'au moins une de ces faces la matière active de l'électrode, la matière active de l'électrode négative comprenant un composé d'insertion du lithium.

27. Générateur selon la revendication 26, caractérisé en ce que la matière active de l'électrode négative est un matériau carboné choisi parmi le graphite, le coke et le carbone vitreux.

28. Générateur selon l'une des revendications 26 ou 27 caractérisé en ce que le matériau constituant le collecteur de l'électrode négative est choisi parmi du cuivre ou du nickel.

29. Générateur selon l'une des revendications 26 à 28, caractérisé en ce que l'épaisseur du collecteur est inférieure à 50 microns.

30. Générateur selon l'une des revendications 26 à 29, caractérisé en ce que le matériau des lamelles connectées à l'électrode négative est choisie parmi du cuivre ou du nickel et son épaisseur comprise entre 50 et 200 microns.

31. Générateur électrochimique selon l'une des revendications précédentes d'une capacité supérieure à 20 ampères heure et/ou d'une puissance supérieure à 60 watts.

## Claims

1. A rechargeable cell with spiral-wound electrodes comprising a container, two current output terminals of opposite polarity (6, 14, 32, 37) carried by said container, each current output comprising a part exterior to said container (7, 17, 34, 38) and an internal part (8, 18, 39), and two electrodes spiral-wound about a longitudinal axis (X'X), one of positive polarity (12) and the other of negative polarity (11), and electrically connected to a corresponding current output, characterized in that at least one current output terminal comprises an internal part provided with a cylindrical shoulder (51, 52, 53) having a diameter greater than the transverse dimension of said exterior part (7, 17, 34, 38) and in that the corresponding electrode is provided with a plurality of conductive blade members (4, 4') in part substantially parallel to said longitudinal axis, mechanically and electrically connected to one edge of said electrode and projecting from said edge, said blade members (4, 4') being grouped together on and fixed to at least part of the periphery (10,41) of said shoulder in order to establish electrical contact between said electrode and said current output terminal.

2. The cell claimed in claim 1, characterized in that said shoulder (51, 52, 53) has a width between 40% and 60% of the distance between the exterior radius and the interior radius of the cylinder formed by the spiral-wound electrodes.

3. The cell claimed in claim 2, characterized in that said width is substantially equal to half the distance between said exterior radius and said interior radius of said cylinder formed by said electrodes.

4. The cell claimed in one of claims 1 to 3, characterized in that said cylindrical shoulder has a height between 2 mm and 5 mm.

5. The cell claimed in any one of the preceding claims, characterized in that said blade members are welded to said periphery.

6. The cell claimed in claim 5, characterized in that said blade members are held onto said periphery by means selected from a ring and a wire associated with a groove on said periphery.

7. The cell claimed in any one of the preceding claims, characterized in that said internal part of said terminal comprises a lower area (19) comprising a shoulder 52 to at least part of the periphery of which said blade members (4, 4') are fixed and an upper area (20) comprising at least one flat (21) cooperating with an abutment (22) fixed to said internal face of said container of said cell through the intermediary of at least one flat (50) on a seal (23) between said upper area and said abutment.

8. The cell claimed in claim 7, characterized in that the height of said internal part is between 3 mm and 10 mm.

9. The cell claimed in any one of the preceding claims, characterized in that said container of said cell comprises at least one cover (15) through which said terminal passes, said terminal being fixed to said cover by crushing a seal (25) between said terminal and said cover.

10. The cell claimed in claim 9, characterized in that said crushing is obtained by clamping a nut (35) or by bearing engagement by a fixing part (29).

11. The cell claimed in any one of the preceding claims, characterized in that the length of said electrode is greater than 2 meters.

12. The cell claimed in any one of the preceding claims, characterized in that the number of conductive blade members is greater than 3.

13. The cell claimed in any one of the preceding claims, characterized in that said electrode comprises a current collector in the form of a spiral-wound strip supporting said active material of said electrode on at least part of at least one face, the thickness of said current collector being less than 50 microns (1 micron = 1 µm).

14. The cell claimed in any one of the preceding claims, characterized in that said electrode comprises a current collector in the form of a spiral-wound strip supporting said active material of said electrode on at least part of at least one face, the edge of said collector being reinforced by increasing the thickness of said edge or attaching a part to it.

15. The cell claimed in claim 1, characterized in that said blade member is a thin metal strip both ends of which are fixed to said collector, said blade member forming a loop.

16. The cell claimed in any one of the preceding claims, characterized in that it consists of a lithium cell.

17. A lithium cell comprising a container having a bottom and a cover (15) each carrying a current output terminal (6, 14, 32, 37), a positive electrode (12) and a negative electrode (11) spiral-wound about a longitudinal axis (X'X), respectively connected to the respective current output, and a set of connections for electrically connecting each electrode to the corresponding current output terminal, characterized in that said terminal comprises an exterior part (7, 17, 34, 38) and an internal part (8, 18, 39), said internal part of said terminal having a cylindrical shoulder (51, 52, 53) having a diameter greater than the transverse dimension of said exterior part of said terminal and in that, for each electrode, said set of connections is a set of conductive blade members (4, 4') in part substantially parallel to said longitudinal axis, mechanically and electrically connected to one edge of said electrode and projecting from said edge, said blade members (4, 4') being grouped together on and fixed to at least part of the periphery of said shoulder in order to establish electrical contact between said electrode and the corresponding current output terminal.

18. The cell claimed in claim 17, characterized in that said positive electrode (12) is electrically connected to a current output terminal (37) at the same potential as said container of said cell.

19. The cell claimed in claim 17, characterized in that said container is of aluminum.

20. The cell claimed in claim 17, characterized in that said electrode comprises a spiral-wound strip supporting said active material of said electrode on at least part of at least one face, said active material of said positive electrode comprising a lithium-containing metal oxide.

21. The cell claimed in claim 20, characterized in that said lithium-containing metal oxide is selected from cobalt, nickel, manganese, vanadium, iron and titanium oxides and mixtures thereof.

22. The cell claimed in claim 20 or 21, characterized in that the material of said current collector of said positive electrode is selected from aluminum and stainless steel.

23. The cell claimed in any one of claims 20 to 22, characterized in that the thickness of said collector of said positive electrode is less than 50 microns.

24. The cell claimed in any one of claims 20 to 23, characterized in that the material of said blade members connected to said positive electrode is selected from aluminum and stainless steel and its thickness is between 50 microns and 200 microns.

25. The cell claimed in any one of claims 17 to 24, characterized in that said electrode comprises a spiral-wound strip supporting said active material of said electrode on at least part of at least one face, said active material of said negative electrode containing lithium.

26. The cell claimed in any one of claims 17 to 25, characterized in that said electrode comprises a current collector in the form of a spiral-wound strip supporting said active material of said electrode on at least part of at least one face, said active material of said negative electrode comprising a lithium insertion substance.

27. The cell claimed in claim 26, characterized in that said active material of said negative electrode is a carbon-based material selected from graphite, coke and vitreous carbon.

28. The cell claimed in claim 26 or 27, characterized in that said material of said collector of said negative electrode is selected from copper and nickel.

29. The cell claimed in any one of claims 26 to 28, characterized in that the thickness of said collector is less than 50 microns.

30. The cell claimed in any one of claims 26 to 29, characterized in that the material of said blade members connected to said negative electrode is selected from copper and nickel and its thickness is between 50 microns and 200 microns.

31. The cell claimed in any one of the preceding claims having a capacity greater than 20 ampere-hours and/or a power greater than 60 watts.

## Patentansprüche

1. Wiederaufladbarer elektrochemischer Generator mit spiralig geformten Elektroden, welcher umfasst: einen Behälter, zwei Stromausgangsklemmen mit entgegengesetzter Polarität (6, 14, 32, 37), die von dem Behälter getragen sind, wobei jeder der Stromausgänge einen Bereich außerhalb des Behälters (7, 17, 34, 38) und einen Bereich innerhalb (8, 18, 39) umfasst, und zwei entsprechend einer Längsachse (X'X) spiralig geformte Elektroden, eine mit positiver (12) und die andere mit negativer Polarität (11), die mit dem entsprechenden Stromausgang elektrisch verbunden sind, dadurch gekennzeichnet, dass wenigstens eine Stromausgangsklemme einen inneren Bereich umfasst, der mit einer zylindrischen Schulter (51, 52, 53) mit einem Durchmesser größer als die Querabmessung des äußeren Bereiches (7, 17, 34, 38) versehen ist, und dass die entsprechende Elektrode mit mehreren leitfähigen Lamellen (4, 4') versehen ist, die sich teilweise im Wesentlichen parallel zu der Längsachse erstrecken, mechanisch und elektrisch mit einem der Ränder der Elektrode verbunden sind und über diesen Rand überstehen, wobei diese Lamellen (4, 4') an wenigstens einem Bereich der Peripherie (10, 41) der Schulter zusammengeführt und befestigt sind, um den elektrischen Kontakt zwischen der Elektrode und der Stromausgangsklemme herzustellen.

2. Generator nach Anspruch 1, dadurch gekennzeichnet, dass die Schulter (51, 52, 53) eine Breite hat, die zwischen 40 und 60 % des Abstandes zwischen dem äußeren Radius und dem inneren Radius des durch die Spirale der Elektroden gebildeten Zylinders ausmacht.

3. Generator nach Anspruch 2, dadurch gekennzeichnet, dass diese Breite im Wesentlichen gleich der Hälfte des Abstandes zwischen dem äußeren Radius und dem inneren Radius des von den Elektroden gebildeten Zylinders ist.

4. Generator nach einem der Ansprüche 1 bis 3, dadurch gekennzeichnet, dass die zylindrische Schulter eine Höhe zwischen 2 und 5 mm hat.

5. Generator nach einem der vorhergehenden Ansprüche, dadurch gekennzeichnet, dass die Lamellen an der Peripherie durch Schweißen oder Löten befestigt sind.

6. Generator nach Anspruch 5, dadurch gekennzeichnet, dass die Lamellen an der Peripherie durch ein Mittel gehalten gewesen sind, das unter einem einer an der Peripherie vorhandenen Rille zugeordnetem Draht oder Ring ausgewählt ist.

7. Generator nach einem der vorhergehenden Ansprüche, dadurch gekennzeichnet, dass der innere Bereich der Klemme zwei Zonen umfasst, eine untere Zone (19) mit einer Schulter (52), wobei an wenigstens einem Bereich von deren Peripherie die Lamellen (4, 4') befestigt sind, und eine obere Zone (20), die wenigstens eine Abflachung (21) umfasst, die mit einem an der Innenseite des Behälters des Generators befestigten Anschlag (22) über wenigstens eine Abflachung (50) zusammenwirkt, die an einer zwischen der oberen Zone und dem Anschlag angeordneten Dichtung (23) vorhanden ist.

8. Generator nach Anspruch 7, dadurch gekennzeichnet, dass die Höhe des inneren Bereiches zwischen 3 und 10 mm beträgt.

9. Generator nach einem der vorhergehenden Ansprüche, dadurch gekennzeichnet, dass der Behälter des Generators wenigstens einen Deckel (15) umfasst, der von der Klemme durchquert wird, die an dem Deckel durch Flachdrücken einer zwischen der Klemme und dem Deckel vorhandenen Dichtung (25) befestigt ist.

10. Generator nach Anspruch 9, dadurch gekennzeichnet, dass dieses Flachdrücken durch ein Einspannmittel erhalten wird, das zwischen einer Mutter (35) oder dem Andrücken eines Befestigungsteiles (29) ausgewählt ist.

11. Generator nach einem der vorhergehenden Ansprüche, dadurch gekennzeichnet, dass die Länge der Elektrode größer als 2 m ist.

12. Generator nach einem der vorhergehenden Ansprüche, dadurch gekennzeichnet, dass die Zahl der leitfähigen Lamellen größer als 3 ist.

13. Generator nach einem der vorhergehenden Ansprüche, dadurch gekennzeichnet, dass die Elektrode ein als Stromsammler bezeichnetes spiralförmiges Band umfasst, das an wenigstens einem Bereich wenigstens einer seiner Seiten das aktive Material der Elektrode trägt, wobei die Dicke des Stromsammlers kleiner als 50 Mikron (1 Mikron = 1 µm) ist.

14. Generator nach einem der vorhergehenden Ansprüche, dadurch gekennzeichnet, dass die Elektrode ein als Stromsammler bezeichnetes spiralförmiges Band umfasst, das an wenigstens einem Bereich wenigstens einer seiner Seiten das aktive Material der Elektrode trägt, wobei der Rand des Stromsammlers durch eine mit dem Rand einteilige oder angefügte Verdickung verstärkt ist.

15. Generator nach Anspruch 1, dadurch gekennzeichnet, dass die Lamelle ein dünnes Metallband ist, dessen zwei Enden am Stromsammler befestigt sind, wobei die Lamelle eine Schleife bildet.

16. Generator nach einem der vorhergehenden Ansprüche, dadurch gekennzeichnet, dass er ein lithiumhaltiger Generator ist.

17. Lithiumhaltiger elektrochemischer Generator, welcher umfasst: einen Behälter, der mit einem Boden und einem Deckel (15) versehen ist, die jeweils eine Stromausgangsklemme (6, 14, 32, 37) tragen, eine positive (12) und eine negative (11) Elektrode, die entsprechend einer Längsachse (X'X) spiralig geformt sind und jeweils an den entsprechenden Stromausgang angeschlossen sind, und eine Anordnung von Verbindungen zum elektrischen Verbinden jeder Elektrode mit der entsprechenden Stromausgangsklemme, dadurch gekennzeichnet, dass die Klemme einen äußeren Bereich (7, 17, 34, 38) und einen inneren Bereich (8, 18, 39) umfasst, wobei der innere Bereich der Klemme mit einer zylindrischen Schulter (51, 52, 53) mit einem größeren Durchmesser als dem der Querabmessung des äußeren Bereiches der Klemme versehen ist, und dass diese Anordnung von Verbindungen für jede Elektrode eine Anordnung von leitfähigen Lamellen (4, 4') ist, die sich teilweise im Wesentlichen parallel zur Längsachse erstrecken, mechanisch und elektrisch mit einem der Ränder der Elektrode verbunden sind und über diesen Rand überstehen, wobei diese Lamellen (4, 4') an wenigstens einem Bereich der Peripherie der Schulter zusammengeführt und befestigt sind, um den elektrischen Kontakt zwischen der Elektrode und der entsprechenden Stromausgangsklemme herzustellen.

18. Generator nach Anspruch 17, dadurch gekennzeichnet, dass die positive Elektrode (12) elektrisch an eine Stromausgangsklemme (37) auf dem gleichen Potential wie der Behälter des Generators angeschlossen ist.

19. Generator nach Anspruch 17, dadurch gekennzeichnet, dass der Behälter aus Aluminium ist.

20. Generator nach Anspruch 17, dadurch gekennzeichnet, dass die Elektrode ein spiralförmiges Band umfasst, das auf wenigstens einem Bereich wenigstens einer seiner Seiten das aktive Material der Elektrode trägt, wobei das aktive Material der positiven Elektrode ein lithiumhaltiges Metalloxid umfasst.

21. Generator nach Anspruch 20, dadurch gekennzeichnet, dass das lithiumhaltige Metalloxid ausgewählt ist unter den Oxiden von Kobalt, Nickel, Mangan, Vanadium, Eisen, Titan und deren Gemischen.

22. Generator nach einem der Ansprüche 20 oder 21, dadurch gekennzeichnet, dass das Material des Stromsammlers der positiven Elektrode ausgewählt ist unter Aluminium oder rostfreiem Stahl.

23. Generator nach einem der Ansprüche 20 bis 22, dadurch gekennzeichnet, dass die Dicke des Stromsammlers der positiven Elektrode kleiner als 50 Mikron ist.

24. Generator nach einem der Ansprüche 20 bis 23, dadurch gekennzeichnet, dass das Material der an die positive Elektrode angeschlossenen Lamellen ausgewählt ist unter Aluminium oder rostfreiem Stahl und dass ihre Dicke zwischen 50 und 200 Mikron beträgt.

25. Generator nach einem der Ansprüche 17 bis 24, dadurch gekennzeichnet, dass die Elektrode ein spiralförmiges Band umfasst, das auf wenigstens einem Bereich wenigstens einer seiner Seiten das aktive Material der Elektrode trägt, wobei das aktive Material der negativen Elektrode Lithium umfasst.

26. Generator nach einem der Ansprüche 17 bis 25, dadurch gekennzeichnet, dass die Elektrode ein als Stromsammler bezeichnetes spiralförmiges Band umfasst, das auf wenigstens einem Bereich wenigstens einer seiner Seiten das aktive Material der Elektrode trägt, wobei das aktive Material der negativen Elektrode eine Lithium einbauende Zusammensetzung ist.

27. Generator nach Anspruch 26, dadurch gekennzeichnet, dass das aktive Material der negativen Elektrode ein kohlenstoffhaltiges Material ist, das ausgewählt ist unter Graphit, Koks und glasartigem Kohlenstoff.

28. Generator nach einem der Ansprüche 26 oder 27, dadurch gekennzeichnet, dass das den Stromsammler der negativen Elektrode bildende Material ausgewählt ist unter Kupfer oder Nickel.

29. Generator nach einem der Ansprüche 26 bis 28, dadurch gekennzeichnet, dass die Dicke des Stromsammlers kleiner als 50 Mikron ist.

30. Generator nach einem der Ansprüche 26 bis 29, dadurch gekennzeichnet, dass das Material der an die negative Elektrode angeschlossenen Lamellen ausgewählt ist unter Kupfer oder Nickel und dass ihre Dicke zwischen 50 und 200 Mikron beträgt.

31. Elektrochemischer Generator nach einem der vorhergehenden Ansprüche mit einer Kapazität von über 20 Ah und/oder einer Leistung von über 60 W.
